# EUROPEAN PATENT SPECIFICATION

(11) **EP 1 420 937 B1**
(45) Date of publication and mention of the grant of the patent: **27.09.2006**
(21) Application number: 02760483.4
(22) Date of filing: 30.08.2002
(51) Int. Cl.: B29C 65/06, F16L 47/02

(54) **METHOD FOR SEALINGLY COUPLING A PIPE UNION ASSEMBLY MADE OF PLASTIC AND CORRESPONDING PIPE/UNION ASSEMBLY**
VERFAHREN ZUM ABGEDICHTETEN VERBINDEN EINES ROHRVERBINDUNGSAUFBAUS AUS KUNSTSTOFF UND ENTSPRECHENDER ROHRVERBINDUNGSAUFBAU
PROCEDE DESTINE A COUPLER DE MANIERE ETANCHE UN ENSEMBLE CONDUIT/RACCORD CONSTITUE DE PLASTIQUE, ET ENSEMBLE CONDUIT/RACCORD CORRESPONDANT

(30) Priority: 31.08.2001 IT VI20010181
(43) Date of publication of application: 26.05.2004
(73) Proprietor: FITT S.p.A., 36066 Sandrigo (Vicenza) (IT)
(72) Inventor: MEZZALIRA, Rinaldo, I-36100 Vicenza (IT)
(74) Representative: Vannini, Mario
(86) International application number: PCT/IB2002/003520
(87) International publication number: WO 2003/018296

(56) References cited:
- WO-A-97/17188
- FR-A- 2 242 213
- US-A- 3 779 446
- US-A- 4 784 409

## Description

### Technical field

The present invention relates generally to the sector of gardening, leisure activities and civil and industrial plant engineering and in particular concerns a method for sealingly coupling unions to pipes made of plastic so as to produce hydraulically sealed pipe/union assemblies.

A further aspect of the invention relates to a pipe/union assembly which is sealingly coupled using the abovementioned method.

### Background art

In the abovementioned technological sectors very frequently there exists the need to connect a pump, a valve, a tap or a manifold to other utilities such as an irrigator, a nozzle, a distributor or similar accessories provided with an inlet and an outlet.

In order to perform this connection the user must have an assembly essentially consisting of a pipe provided with one or more end unions made of relatively rigid material. The pipe may be of the rigid, semi-rigid or flexible type. In this latter case it may be uniform, reinforced with a spiral of semi-rigid plastic material and optionally have a smooth external surface.

The unions are normally provided with internal or external threads or, alternatively, may also have other coupling devices, for example of the expansion or snap-engagement type, for connection to corresponding devices.

Some methods for performing the connections between pipes and unions are widely known. One of these methods envisages the use of an ordinary metal pipe-clamping band which may be tightened by means of a screw or other similar device. Although this solution has the advantage that it is simple and can be easily disassembled, it is unreliable, not cost-effective and a esthetically unsatisfactory since it projects visibly from the profile of the pipe and the union and may therefore easily come loose or be dangerous for the user.

In place of the band it is possible to use other damping devices such as, for example, rings, bevel gear pairs, annular arrangements, etc., as for example illustrated in US-A-5,580,100, US-A-5,028,078, US-A-3,751,075, EP-A-1103752, EP-A-940620, EP-A-410843, WO-A-97/42442.

Another method envisages forming of the union of plastic material directly on the pipe by means of a press or a special mould. Examples of these methods and assemblies are illustrated in US-A-5,776,740, US-A-3,977,708, EP-A-599316 and EP-A-440566.

This method has the disadvantage that it requires a special mould for each type and diameter of the pipe and unions and is therefore somewhat costly and inflexible.

Yet another method envisages bonding together the pipe and the union on the outside or the inside thereof by means of special adhesives, as described in DE-A-19906015. DE-A-19927431, DE-A-4339419 and WO01/21996.

This method has the disadvantage that it requires unions with relatively small machining tolerances in order to ensure optimum adhesion of the components to be bonded, with negative effects from a purely economic point of view.

WO-A-97/17188 which is considered to be the closes prior art to the invention, discloses a method for sealingly coupling a pipe union assembly made of plastic material having all the features mentioned in the preamble of claims 1 and 12.

However, in this known assembly the pipe is uniform and has no reinforcement element thus resulting in a weaker joint and assembly.

Moreover, this prior art document gives no information as to the materials forming the pipe and union as well as to the welding between the different parts.

### Disclosure of the invention

A primary object of the present invention is that of overcoming the abovementioned drawbacks by providing a method for coupling a pipe and a union made of plastic materials, which has the characteristics of high efficiency, reliability, ease of manufacture, tow cost and aesthetic appeal.

A particular object is that of developing a coupling method which can be performed using standard equipment and materials which can be easily found commercially, without requiring complex and specific machines.

Another particular object is that of designing a pipe/union assembly made of plastic materials with the characteristics of an optimum hydraulic seat, reliability and aesthetic appeal.

These objects together with others, which will appear more clearly below, are achieved by a method for coupling a pipe and a union made of thermoplastic material in accordance with Claim 1.

According to a further aspect of the invention, the latter envisages a pipe/union assembly in accordance with Claim 12.

### Brief description of the drawings

Further characteristic features and advantages of the invention will be more dearly understood from to the following description of certain preferred, but not exclusive embodiments of a method for coupling a pipe and a union in a hydraulically sealed manner and pipe/union assembly made using the above mentioned method, which are illustrated by way of a non-limiting example with the aid of the accompanying drawings in which:
**FIG. 1** shows a perspective view of a general embodiment of a pipe/union assembly according to the invention before assembly thereof;
**FIG. 2** shows a perspective view of the assembly according to Fig. 1, completely assembled;
**FIG. 3** shows a partially sectioned view of a first embodiment of the assembly according to Fig. 1;
**FIG. 4** shows the assembly according to Fig. 3, completely assembled;.
**FIG. 5** shows a partially sectioned view of a second embodiment of the assembly according to Fig. 1;
**FIG. 6** shows the assembly according to Fig. 5, completely assembled.

### Detailed description of the preferred embodiment(s)

In the said figures the same reference numbers will be used to identify identical or corresponding structural elements of the different embodiments.

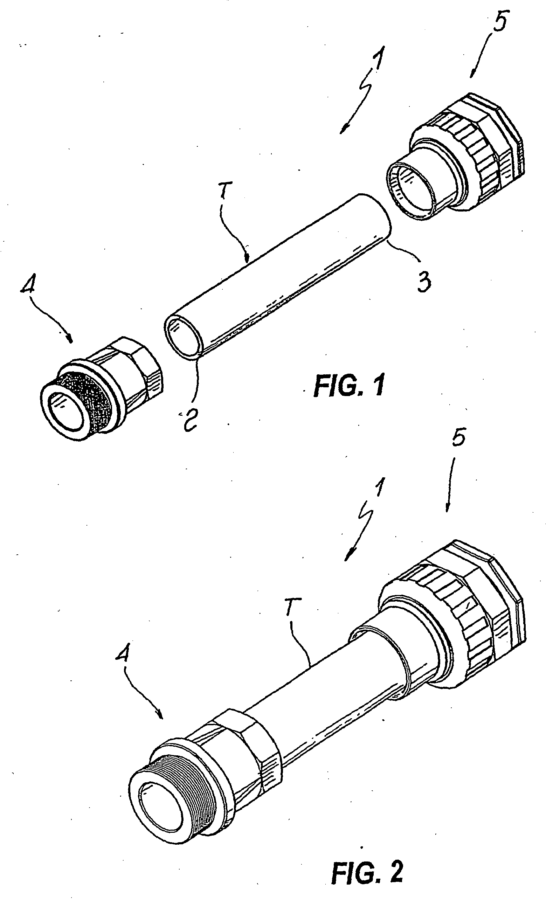

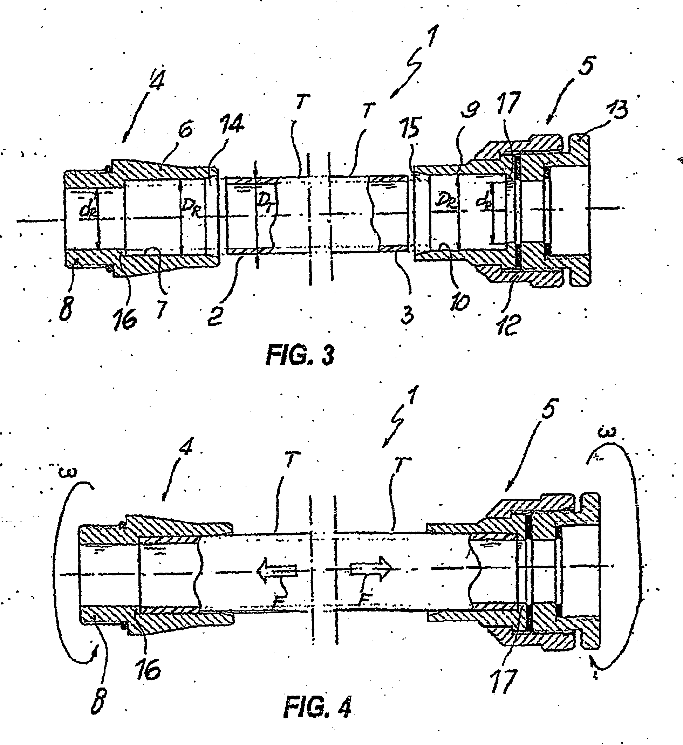

With specific reference to Figs. 1 to 4 these show a sealed assembly according to the invention, denoted in its entirety by the reference number 1 and essentially consisting of a pipe section T made of plastic materials with end unions 4, 5 also made of plastic materials.

The coupling method according to the invention is described below with reference to both ends of the pipe T, although it is obvious that it may be applied to only one of these ends.

The method envisages a step a) involving formation, in the pipe section T made of a first plastic material for example PVC, of a first element consisting of at least one of the end sections 2, 3 cut at a right angle.

Then, it is envisaged forming a second element consisting of at least one of the end unions 4, 5, made of a second material which is also plastic, but relatively more rigid, for example rigid PVC.

In particular, the union 4 is formed with a substantially tubular portion 6 having an internal surface 7 which is substantially cylindrical with a constant diameter D_{R} which is smaller, by a few tenths, for example 0 to 0.3 mm, than the external diameter D_{T} of the pipe T.

The union 4 also has an externally threaded end portion for connection to a pump, a valve, a tap or any other accessory.

Similarly, the other union 5 will also be formed so as to have a tubular portion 9 with a substantially cylindrical internal surface 10 having a constant diameter D_{R}<D_{T} and an externally threaded end portion 11 coupled, by means of a ring nut 12, to an internally threaded connecting ring 13.

Obviously, apart from the tubular portions, the unions 4, 5 may also have other forms without thereby departing from the scope of the invention as defined in the appended claims.

Preferably, both the tubular portions 6, 9 of the unions 4, 5 are provided with end chamfers 14, 15 in order to favour the insertion of the end sections 2, 3.

According to the invention, a step c) involving alignment of each end section/union pair 2, 4 and 3, 5 along a longitudinal axis L is envisaged.

At this point, a step d) involving relative rotation about the axis L and simultaneous axial mutual compression of each end section/union pair 2, 4 and 3, 5 with a force F of predetermined value is envisaged.

As a result of the friction produced between the pairs of elements 2, 4 and 3, 5, a large amount of heat is generated, resulting in melting of the surface layers of the unions in the zone Z of mutual contact. During this step, as a result of the mutual compression, the melted surface layers of the unions 2, 3 and the end sections 4, 5 will interpenetrate and may emerge from the edge of the union 4, 5 in the form of a small bead of plastic material.

Finally, it is envisaged stopping e) relative rotation of the end section/union pairs 2, 4 and 3, 5 in order to cool the melting zone Z, causing solidification of the plastic material, so as to produce sealed coupling together thereof.

In order to perform the relative rotation, it is possible to rotate and axially lock only one of the elements of each pair and rotationally lock and compress the other element.

In particular, it was preferred to rotationally lock and compress each end section 2, 3 and cause rotation, axially locking each union 4, 5 by means of suitable apparatus.

Advantageously, the speed of relative rotation o and the compressive mutual force F of the unions 4, 5 and the end sections 2, 3 is such that melting of the zone of mutual contact Z occurs in a predetermined time period t_{f}.

For technical and production-related reasons, it was ascertained that the optimum time t_{f} is between for example 2 and 10 seconds and is preferably close to 5 seconds. In this way, the plastic material of the two elements is allowed to interpenetrate and to bond together so as to ensure a perfect seal.

Good results have been achieved with a speed of rotation ω of between 50 and 1500 revolutions per minute and preferably close to 300 revolutions per minute.

The compressive force F applied during rotation is substantially constant and between 30N and 500N, and is preferably close to 100N.

Advantageously, an annular projection, indicated respectively by 16, 17, with an internal diameter d_{R}, less than the external diameter D_{T} of each end section 2, 3, is formed on the internal surface 7, 10 of each union 4, 5. This contact element determines the end of travel of axial displacement of the end sections 2, 3 during the rotation of the unions 4, 5.

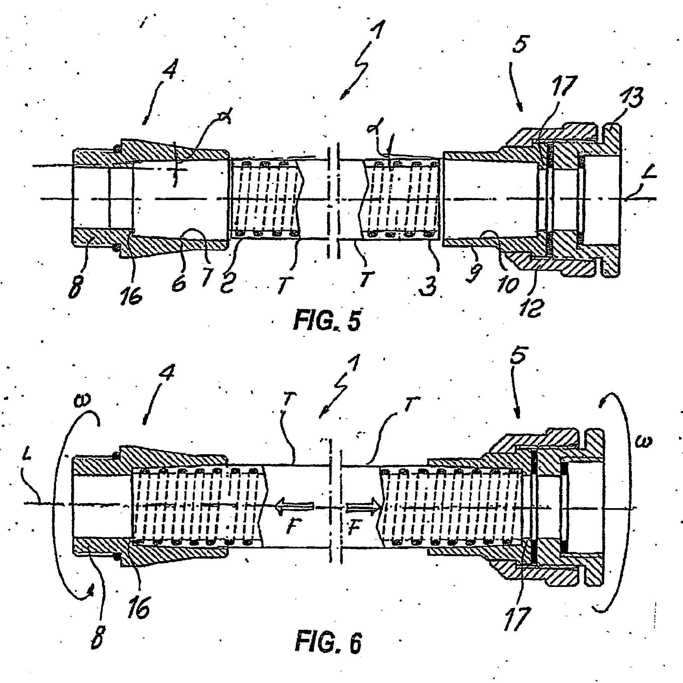

The embodiment illustrated in Figs. 5 and 6 differs from that of the preceding figures essentially in that the internal surface of the tubular portion 6, 10 of the unions 4, 5 is slightly conical with an angle of conicity α of between 1° ° and 5° and preferably close to 2°.

Moreover, the pipe T is of the "spiralled" type, namely made the first flexible plastic material with a reinforcement made of a third and more rigid plastic material in the form of a continuous cylindrical spiral.

By way of a non-limiting example, the plastic materials chosen for each of said elements may be PVC, PUR, EVA, PE, PP, PBT or PET, natural or synthetic rubbers or combinations thereof.

The materials forming the unions and the pipe may be identical or similar so as to be able to be easily heat-weldable.

Experimentally the apparatus for implementing the method consisted of a simple lathe in which the chuck of the rotating head causes rotation of the unions 4, 5 without the possibility of axial displacement and the tailstock locks rotation and allows translation of the end sections 2, 3 of the pipe T. The force F on the end sections 2, 3 may be exerted manually or by a hydraulic piston which is suitably controlled.

A pipe/union assembly made of plastic material and obtained by means of the method described above comprises a pipe section T made of plastic material with a constant diameter and having end sections 2, 3 and one or more unions 4, 5 also made of plastic material and coupled to the respective end sections.

Each union 4, 5 has a tubular portion 6, 9 with an internal surface 7, 10 which is substantially cylindrical or has a slight conicity, with a mean diameter D_{R} smaller than the external diameter D_{T} of the corresponding end section 2, 3.

Each end section 2, 3 is inserted inside the tubular portion 6, 9 of the respective union 4, 5 and is uniformly coupled to the internal surface 7, 10 by means of frictional melting following relative rotation in the zone of mutual contact Z so as to produce in this zone a hydraulically sealed joint.

Preferably, the assembly comprises both the end sections 2, 3 coupled to the end unions 4, 5.

The pipe T may be of the type comprising a uniform relatively rigid wall or of the "spiralled" type namely a wall which is relatively flexible with a reinforcement in the form of continuous cylindrical spiral.

Advantageously, the tubular portion 6, 9 of each union 4, 5 may have on its internal surface 7, 10 an annular projection 16, 17 with an internal diameter d_{R} less than the external diameter D_{T} of each end section 2, 3. Each end section 2, 3 is inserted inside the respective tubular portion 6, 9 with the longitudinal end of the end section at the end of its travel path against the corresponding annular projection 16, 17.

From the above description it is obvious that the method and the assembly according to the invention achieve the predefined objects and particular attention is drawn to the simplicity, reliability, cost-effectiveness and aesthetic appeal of the coupling obtained.

In particular, as a result of the coupling method according to the invention, it is possible to couple pipes T having an external diameter of up to 30 mm with a tolerance of up to 0.3 mm and an external diameter of up to 100 with tolerances of up to 0.6 mm.

This allows the operations to be simplified and the production costs of the pipes and thus the finished pipe/union assemblies to be reduced.

## Claims

1. Method for sealingly coupling a pipe/union assembly made of plastic materials, comprising the following steps:
a) formation of a first element consisting of an end section (2, 3) of a pipe (T) with a predetermined external diameter (D_{T});
b) formation of a second element consisting of a union (4, 5) with a tubular portion (6, 9) having a substantially cylindrical or frustoconical internal surface (7, 10) with an internal diameter (D_{R}) slightly smaller than the external diameter (D_{T}) of the pipe;
c) alignment of said first element (2, 3) and said second element (4, 5) along a longitudinal axis (L);
d) relative rotation about said axis (L) and axial mutual compression of said elements (2, 3; 4, 5) so as to generate heat as a result of friction and cause melting of the zone of mutual contact (Z);
e) stoppage of relative rotation of said first and said second elements in order to cool the melting zone (Z), causing solidification of the molten material, so as to produce a sealed joint between said elements (2, 3; 4, 5);
wherein said first element (2, 3) is made of a first plastic material and said second element (4, 5) is made of a second plastic materials, said first and said second plastic material being chosen from among identical or similar plastic materials;
**characterised in that** said second plastic material forming said second element (4, 5) is more rigid than said first plastic material forming said first element (2, 3), said first element (2, 3) being formed as a wall of said first plastic material with a reinforcement made with a third plastic material that is more rigid than said first plastic material.

2. Method according to Claim 1, **characterized in that** said reinforcement of said third plastic material is shaped as a continuous cylindrical spiral.

3. Method according to Claim 1, **characterized in that** said plastic materials forming said first and second elements are chosen from among PVC, PUR, EVA PE, PP, PBT or PET, natural or synthetic rubbers or combinations thereof.

4. Method according to Claim 1, **characterized in that** said relative rotation is performed by rotating and axially locking only one (4, 5) of said elements and rotationally locking and compressing the other element (2, 3).

5. Method according to Claim 4, **characterized in that** said element which is made to rotate and locked axially consists of said union (4, 5).

6. Method according to Claim 5, **characterized in that** the speed of relative rotation (ω) and the compressive force (F) of said elements is such that melting of the zone (Z) of mutual contact occurs in a predetermined time period (t_{f}) of between 2 and 10 seconds and preferably close to 5 seconds.

7. Method according to Claim 6, **characterized in that** said speed of rotation is between 50 and 1500 revolutions per minute and is preferably close to 300 revolutions per minute.

8. Method according to Claim 7, **characterized in that** the mutual compressive force of said first and second elements is substantially constant and between 30N and 500N, and is preferably close to 100N.

9. Method according to any preceding claim, **characterized by** the fact of providing, on the internal surface of said union, an annular projection (16, 17) with an internal diameter smaller than the external diameter of said end section.

10. Method according to Claim 9, **characterized in that** said mutual axial compression is maintained until said end section (2, 3) comes into contact against said annular projection (16, 17).

11. Method according to Claim 1, **characterized in that** the angle of conicity (α) of said internal surface of said union is between 1° and 5° and is preferably close to 2°.

12. Pipe/union assembly made of plastic material, comprising a pipe section (T) of a first plastic material with a constant diameter and with end sections (2, 3), and at least one union (4, 5) which is made of a second plastic material and is coupled to at least one of said end sections (2, 3), each union (4, 5) having a tubular portion (6, 9) with an internal surface (7, 10) which is substantially cylindrical or has a slight conicity, said tubular portion (6, 9) having a mean diameter which is smaller than the external diameter of the corresponding end section (2, 3), said end section (2, 3) being inserted inside said tubular portion (6, 9) of the union and being uniformly coupled to its internal surface (7, 10) by means of frictional melting following relative rotation in the zone of mutual contact, so as to produce a hydraulically sealed joint in this zone, said first and said second plastic materials being identical or similar to each other, **characterised in that** said second plastic material of said union (4, 5) is more rigid than said first plastic material of said pipe section (2, 3), said tube section having a wall of said first plastic material with a reinforcement of a third plastic material that is more rigid than said first plastic material.

13. Assembly according to Claim 12, **characterized in that** said reinforcement is shaped as a continuous cylindrical spiral.

14. Assembly according to Claim 12, **characterized in that** both end sections (2, 3) are coupled to respective unions (4, 5).

15. Assembly according to Claim 12, **characterized in that** the tubular portion (6, 9) of said union has on its internal surface an annular projection (16, 17) with an internal diameter less than the internal diameter of said end section, said end section (2, 3) being inserted inside said tubular portion (6, 9) of said union with the longitudinal end making contact against said annular projection (16, 17).

## Patentansprüche

1. Verfahren zum abgedichteten Verbinden eines Rohrverbindungsaufbaus aus Kunststoff mit den folgenden Schritten:
a) Bilden eines ersten Elements, das aus einem Endabschnitt (2, 3) eines Rohrs (T) mit einem vorbestimmten äußeren Durchmesser (D_{T}) besteht,
b) Bilden eines zweiten Elements, das aus einer Verbindung (4, 5) mit einem rohrförmigen Abschnitt (6, 9) mit einer im wesentlichen zylindrischen oder kegelstumpfförmigen inneren Oberfläche (7, 10) mit einem inneren Durchmesser (D_{R}) besteht, der etwas kleiner ist als der äußere Durchmesser (D_{T}) des Rohrs,
c) Ausrichten des ersten Elements (2, 3) und des zweiten Elements (4, 5) entlang einer longitudinalen Achse (L),
d) relatives Drehen um diese Achse (L) und axiale gegenseitige Kompression der Elemente (2, 3, 4, 5), um so Wärme zu erzeugen als ein Ergebnis von Reibung und den Bereich der gegenseitigen Anlage (Z) zum Schmelzen bringen,
e) Stoppen des relativen Drehens der ersten und zweiten Elemente um den Schmelzbereich (Z) zu kühlen, so dass sich das geschmolzene Material verfestigt und so eine abgedichtete Verbindung zwischen den Elementen (2, 3, 4, 5) entsteht,
wobei das erste Element (2, 3) aus einem ersten Kunststoff gefertigt ist und das zweite Element (4, 5) aus einem zweiten Kunststoff gefertigt ist und die ersten und zweiten Kunststoffe ausgewählt sind aus identischen oder ähnlichen Kunststoffen, **dadurch gekennzeichnet, dass** der zweite Kunststoff, der das zweite Element (4, 5) bildet, steifer ist als der erste Kunststoff, der das erste Element (2, 3) bildet, wobei das erste Element (2, 3) gebildet ist aus einer Wand des ersten Kunststoffs mit einer Verstärkung, die aus einem dritten Kunststoff hergestellt ist, der steifer ist als der erste Kunststoff.

2. Verfahren gemäß Anspruch 1, **dadurch gekennzeichnet, dass** die Verstärkung aus dem dritten Kunststoff als eine kontinuierlich zylindrische Spirale geformt ist.

3. Verfahren gemäß Anspruch 1, **dadurch gekennzeichnet, dass** die Kunststoffe, die die ersten und zweiten Elemente bilden ausgewählt sind aus PVC, PUR, EVAPE, PP, PBT oder PET, natürliche oder synthetische Gummis oder Zusammensetzungen daraus.

4. Verfahren gemäß Anspruch 1, **dadurch gekennzeichnet, dass** die relative Drehung geleistet wird durch drehen und axial verriegeln von nur einem (4, 5) der Elemente und drehbar verriegeln und komprimieren des anderen Elements (2, 3).

5. Verfahren gemäß Anspruch 4, **dadurch gekennzeichnet, dass** das Element, das zum Drehen und axial Verriegeln gebracht ist, aus der Verbindung (4, 5) besteht.

6. Verfahren gemäß Anspruch 5, **dadurch gekennzeichnet, dass** die Geschwindigkeit der relativen Drehung (ω) und die Kompressionskraft (F) des Elements so ist, dass das Schmelzen im Bereich (Z) der gegenseitigen Anlage in einer vorbestimmten Zeitdauer (t_{f}) von zwischen 2 und 10 sek. und vorzugsweise nahe bei 5 sek. auftritt.

7. Verfahren gemäß Anspruch 6, **dadurch gekennzeichnet, dass** die Geschwindigkeit der Drehung (ω) zwischen 50 und 1500 Umdrehungen pro Minute ist und vorzugsweise nahe bei 300 Umdrehungen pro Minute ist.

8. Verfahren gemäß Anspruch 7, **dadurch gekennzeichnet, dass** die gegenseitige Kompressionskraft der ersten und zweiten Elements im wesentlichen konstant ist und zwischen 30 N und 500 N und vorzugsweise nahe bei 100 N ist.

9. Verfahren gemäß einem der vorhergehenden Ansprüche, **dadurch gekennzeichnet, dass** ein ringförmiger Vorsprung (16, 17) an der inneren Oberfläche der Verbindung vorgesehen ist mit einem inneren Durchmesser, der kleiner ist als der äußere Durchmesser des Endabschnitts.

10. Verfahren gemäß Anspruch 9, **dadurch gekennzeichnet, dass** die gegenseitige axiale Kompression aufrecht erhalten bleibt bis der Endabschnitt (2, 3) in Anlage kommt an dem ringförmigen Vorsprung (16, 17).

11. Verfahren gemäß Anspruch 1, **dadurch gekennzeichnet, dass** der Winkel des Konus (α) der inneren Oberfläche der Verbindung zwischen 1° und 5° ist und vorzugsweise nahe bei 2° ist.

12. Rohrverbindungsaufbau aus Kunststoff mit einem Rohrabschnitt (T) eines ersten Kunststoffs mit einem konstanten Durchmesser und mit Endabschnitten (2, 3) und mindestens einer Verbindung (4, 5), die aus einem zweiten Kunststoff hergestellt ist und verbunden ist mit mindestens einer der Endabschnitte (2, 3), wobei jede Verbindung (4, 5) einen rohrförmigen Abschnitt (6, 9) aufweist mit einer inneren Oberfläche (7, 10), die im wesentlichen zylindrisch oder leicht konisch ist, wobei der rohrförmige Abschnitt (6, 9) einen mittleren Durchmesser hat, der kleiner ist als der äußere Durchmesser des entsprechenden Endabschnitts (2, 3) und der Endabschnitt (2, 3) in den rohrförmigen Abschnitt (6, 9) der Verbindung eingesetzt ist und gleichförmig mit dessen innerer Oberfläche (7, 10) verbunden ist mittels Einrichtungen zum Reibschmelzen nach relativer Drehung im Bereich der gegenseitigen Anlage, so dass eine hydraulisch abgedichtete Verbindung in diesem Bereich geschaffen wird, wobei die ersten und zweiten Kunststoffe identisch oder ähnlich zueinander sind, **dadurch gekennzeichnet, dass** der zweite Kunststoff der Verbindung (4, 5) steifer ist als der erste Kunststoff des Rohrabschnitts (2, 3), wobei der Rohrabschnitt eine Wand aufweist aus dem ersten Kunststoff mit einer Verstärkung aus einem dritten Kunststoff, der steifer ist als der erste Kunststoff.

13. Aufbau gemäß Anspruch 12, **dadurch gekennzeichnet, dass** die Verstärkung als eine kontinuierlich zylindrische Spirale geformt ist.

14. Aufbau gemäß Anspruch 12, **dadurch gekennzeichnet, dass** beide Endabschnitte (2, 3) mit jeweiligen Verbindungen (4, 5) verbunden sind.

15. Aufbau gemäß Anspruch 12, **dadurch gekennzeichnet, dass** der rohrförmige Abschnitt (6, 9) der Verbindung an seiner inneren Oberfläche einen ringförmigen Vorsprung (16, 17) aufweist mit einem inneren Durchmesser, der kleiner ist als der innere Durchmesser des Endabschnitts, wobei dieser Endabschnitt (2, 3) in den rohrförmigen Abschnitt (6, 9) der Verbindung eingesetzt ist mit dem longitudinalen Ende, das anliegt an dem ringförmigen Vorsprung (16, 17).

## Revendications

1. Procédé pour accoupler à joint étanche un ensemble tube/raccord fait de matières plastiques, comprenant les étapes suivantes :
a) formation d'un premier élément constitué par une section d'extrémité (2, 3) d'un tube (T) possédant un diamètre extérieur prédéterminé (D_{T}) ;
b) formation d'un second élément constitué par un raccord (4, 5) ayant une partie tubulaire (6, 9) qui présente une surface interne sensiblement cylindrique ou tronconique (7, 10) et ayant un diamètre intérieur (D_{R}) un peu plus petit que le diamètre extérieur (D_{T}) du tube ;
c) alignement dudit premier élément (2, 3) et dudit second élément (4, 5) le long d'un axe longitudinal (L) ;
d) rotation relative desdits éléments (2, 3 ; 4, 5) l'un par rapport à l'autre autour dudit axe (L) et compression axiale desdits éléments l'un par rapport à l'autre de manière à dégager de la chaleur par suite du frottement et provoquer la fusion de la zone de contact mutuel (Z) ;
e) arrêt de la rotation relative desdits premier et second éléments pour refroidir la zone de fusion (Z) en provoquant la solidification de la matière fondue de manière à produire un joint soudé entre lesdits éléments (2, 3 ; 4, 5) ;
dans lequel ledit premier élément (2, 3) est fait d'une première matière plastique et ledit second élément (4, 5) est fait d'une seconde matière plastique, lesdites première et seconde matières plastiques étant choisies parmi des matières plastiques identiques ou similaires ;
**caractérisé en ce que** ladite seconde matière plastique qui forme ledit second élément (4, 5) est plus rigide que ladite première matière plastique qui forme ledit premier élément (2, 3), ledit premier élément (2, 3) étant réalisé sous la forme d'une paroi faite de ladite première matière plastique avec un renforcement fait d'une troisième matière plastique qui est plus rigide que ladite première matière plastique.

2. Procédé selon la revendication 1, **caractérisé en ce que** ledit renforcement de ladite troisième matière plastique a la forme d'une hélice cylindrique continue.

3. Procédé selon la revendication 1, **caractérisé en ce que** lesdites matières plastiques qui forment lesdites premier et second éléments sont choisies parmi PVC, PUR, EVA, PE, PP, PBT et PET, les caoutchoucs naturels ou synthétiques ou leurs combinaisons.

4. Procédé selon la revendication 1, **caractérisé en ce que** ladite rotation relative est exécutée en faisant tourner et en bloquant axialement un seul (4, 5) desdits éléments et en bloquant en rotation et en comprimant l'autre élément (2, 3).

5. Procédé selon la revendication 4, **caractérisé en ce que** ledit élément qu'on fait tourner et qui est bloqué axialement est constitué par ledit raccord (4, 5).

6. Procédé selon la revendication 5, **caractérisé en ce que** la vitesse de la rotation relative (ω) et la force de compression (F) desdits éléments sont telles que la fusion de la zone (Z) de contact mutuel se produise en une période de temps prédéterminée (t_{f}) comprise entre 2 et 10 secondes et de préférence proche de 5 secondes.

7. Procédé selon la revendication 6, **caractérisé en ce que** ladite vitesse de rotation est compris entre 50 et 1500 tours par minute et est de préférence proche de 300 tours par minute.

8. Procédé selon la revendication 7, **caractérisé en ce** la force de compression mutuelle desdits premier et second éléments est sensiblement constante et comprise entre 30 N et 500 N, et est de préférence proche de 100 N.

9. Procédé selon une des revendications précédentes, **caractérisé par** le fait de prévoir sur la surface interne dudit raccord une saillie annulaire (16, 17) ayant un diamètre intérieur plus petit que le diamètre extérieur de ladite section d'extrémité.

10. Procédé selon la revendication 9, **caractérisé en ce que** ladite compression axiale mutuelle est maintenue jusqu'à ce que ladite section d'extrémité (2, 3) vienne en contact contre ladite saillie annulaire (16, 17).

11. Procédé selon la revendication 1, **caractérisé en ce que** l'angle de conicité (α) de ladite surface interne dudit raccord est compris entre 1° et 5° et est de préférence proche de 2°.

12. Ensemble tube/raccord fait de matière plastique, comprenant une section de tube (T) d'une première matière plastique ayant un diamètre constant et présentant des sections d'extrémité (2, 3), et au moins un raccord (4, 5) qui est fait d'une seconde matière plastique et est accouplé à au moins une desdites sections d'extrémité (2, 3), chaque raccord (4, 5) ayant une partie tubulaire (6, 9) présentant une surface interne (7, 10) qui est sensiblement cylindrique ou possède une légère conicité, ladite partie tubulaire (6, 9) ayant un diamètre moyen qui est plus petit que le diamètre extérieur de la section d'extrémité correspondante (2, 3), ladite section d'extrémité (2, 3) étant insérée à l'intérieur de ladite partie tubulaire (6, 9) du raccord et étant uniformément accouplée à sa surface interne (7, 10) par soudage par friction résultant d'une rotation relative dans la zone de contact mutuel, de manière à produire un joint hydrauliquement étanche dans cette zone, ladite première et ladite seconde matières plastiques étant identiques ou similaires entre elles, **caractérisé en ce que** ladite seconde matière plastique dudit raccord (4, 5) est plus rigide que ladite première matière plastique de ladite section de tube (2, 3), ladite section de tube ayant une paroi de ladite première matière plastique avec un renforcement d'une troisième matière plastique qui est plus rigide que ladite première matière plastique.

13. Ensemble selon la revendication 12 **caractérisé en ce que** ledit renforcement présente la forme d'une hélice cylindrique continue.

14. Ensemble selon la revendication 12, **caractérisé en ce que** les deux sections d'extrémité (2, 3) sont accouplées à des raccords respectifs (4, 5).

15. Ensemble selon la revendication 12, **caractérisé en ce que** la partie tubulaire (6, 9) dudit raccord présente sur sa surface interne une saillie annulaire (16, 17) ayant un diamètre intérieur plus petit que le diamètre intérieur de ladite section d'extrémité, ladite section d'extrémité (2, 3) étant insérée à l'intérieur de ladite partie tubulaire (6, 9) dudit raccord avec l'extrémité longitudinale en contact contre ladite saillie annulaire (16, 17).
